# EUROPEAN PATENT SPECIFICATION

(11) **EP 3 821 700 B1**
(45) Date of publication and mention of the grant of the patent: **06.07.2022**
(21) Application number: 20200450.3
(22) Date of filing: 07.10.2020
(51) Int. Cl.: A01G 13/02, F16B 5/06

(54) **CONNECTING DEVICE FOR ANTI-HAIL NETS**
VERBINDUNGSVORRICHTUNG FÜR HAGELSCHUTZNETZE
DISPOSITIF DE CONNEXION POUR FILETS ANTI-GRÊLE

(30) Priority: 13.11.2019 IT 201900021117
(43) Date of publication of application: 19.05.2021
(73) Proprietor: Plastical S.r.l., 40057 Granarolo dell'Emilia Bologna (IT)
(72) Inventor: CANTELLI, Claudio, 20159 Milano (IT)
(74) Representative: Firmati, Leonardo

(56) References cited:
- EP-A1- 0 898 878
- EP-A1- 1 716 747
- EP-A1- 2 108 503
- FR-A1- 2 876 009

## Description

This invention relates to a connecting device for anti-hail nets.

More specifically, the invention relates to an improved connecting device for anti-hail or anti-rain nets used in the agricultural sector.

In this description, reference is basically made to anti-hail nets, however they also include sheets or other products of similar shape or use.

Anti-hail nets are normally used for agricultural purposes to protect, from hail, fruit crops in which rows of fruit trees are distributed substantially parallel to each other.

Different types of nets have recently been introduced, especially with regard to fruit growing, to protect the fruits not only from hail but also from rain and insects. Irrespective of the specific purposes of the various possible nets, the connecting devices are substantially the same and, therefore, the device according to the invention must be considered to be designed for all types of nets.

There are many ways in which the nets can be positioned relative to the plants to be protected, both by making two sloping sections, like a hut, and by means of a substantially flat arrangement, and also by enclosing the individual rows independently of each other.

In any case, irrespective of the type of arrangement, in order to optimise both the installation costs and the use of these nets, they are connected both to each other and to suitable supporting elements such as, for example, wires or metal cables and/or tie rods.

In other words, in order to guarantee a stable positioning and an equally stable retaining of the nets even in adverse weather conditions, the nets must be able to be secured to the respective supporting elements in a safe and reliable manner.

It is also necessary that the fixing/connection operations for the nets can be easy and practical to perform also by the farmer, without the necessary intervention of specialised operators.

A further feature required in the application of the nets is that this operation can be performed quickly, since it may sometimes have to be carried out even in the event of imminent adverse weather conditions.

In order to provide farmers with practical, fast, economical and effective fixing systems, many different types of connecting devices have been developed over the years, the common aspect of which is that of having a body made of plastic material and coupling means for gripping on the nets and, if necessary, also on the above-mentioned wires or cables.

The prior art devices, even though they have offered many and alternative solutions to the needs of the farmers, have not always been found to be free from drawbacks.

One of these drawbacks is without doubt due to the fact that since in practice they are always devices made by moulding plastic material, they very often have machining irregularities or burrs which in the long run, with the tensioning and the continuous movement (even merely caused by the wind) to which the nets are subjected in use, cause tears or breakages in the nets. These breaks, if widespread, may cause an accelerated and undesired degradation of the covers which must consequently be replaced before their estimated duration.

Since they have large extensions and as a result are a significant investment, a replacement of the nets before planned with respect to their expected life can easily compromise the economics of an entire production year. On the other hand, the extremely low unit cost imposed by the market for these plastic elements does not justify further finishing operations on them such as, for example, a step of finishing the moulding burrs.

Some state of the art prior art devices are known from EP 1 716 747 A1, FR 2 876 009 A1, EP 0 898 878 A1 and EP 2 108 503 A1.

The aim of the invention is to provide a connecting device for anti-hail nets which overcomes the above-mentioned problems, and is at the same time simple to make and practical to use.

A further aim of the invention is to provide a connecting device for anti-hail nets which is reliable and inexpensive to make.

The above-mentioned aims are achieved by a connecting device for anti-hail nets comprising the technical features described in one or more of the appended claims. Further features and advantages of the invention are more apparent in the detailed description which follows, with reference to the accompanying drawings which illustrate non-limiting example embodiments of the invention and in which:
- Figure 1 is a schematic perspective view, in an assembled configuration, of a first embodiment of a connecting device for anti-hail nets according to the invention;
- Figure 2 is a schematic perspective view from above, in a disassembled configuration and with some components missing, of the connecting device for anti-hail nets of Figure 1;
- Figure 3 is a schematic perspective view, in an open configuration, of a second embodiment of a connecting device for anti-hail nets according to the invention;
- Figure 4 is a perspective top plan view of the connecting device for anti-hail nets of Figure 3;
- Figures 5 and 6 are respective schematic perspective views from different angles of a third embodiment of a connecting device for anti-hail nets according to the invention;
- Figure 7 is a schematic perspective view, in an open configuration, of a fourth embodiment of a connecting device for anti-hail nets according to the invention;
- Figure 8 is a perspective top plan view of the connecting device for anti-hail nets of Figure 7;
- Figure 9 is a schematic perspective view, in an open configuration, of a fifth embodiment of a connecting device for anti-hail nets according to the invention;
- Figure 10 is a perspective top plan view of the connecting device for anti-hail nets of Figure 9.

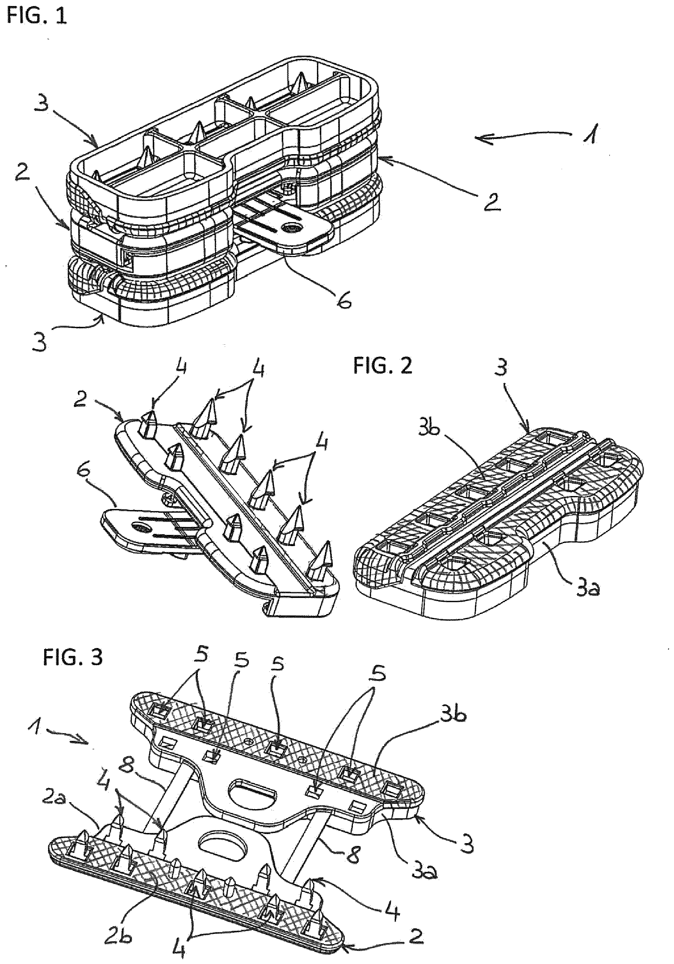

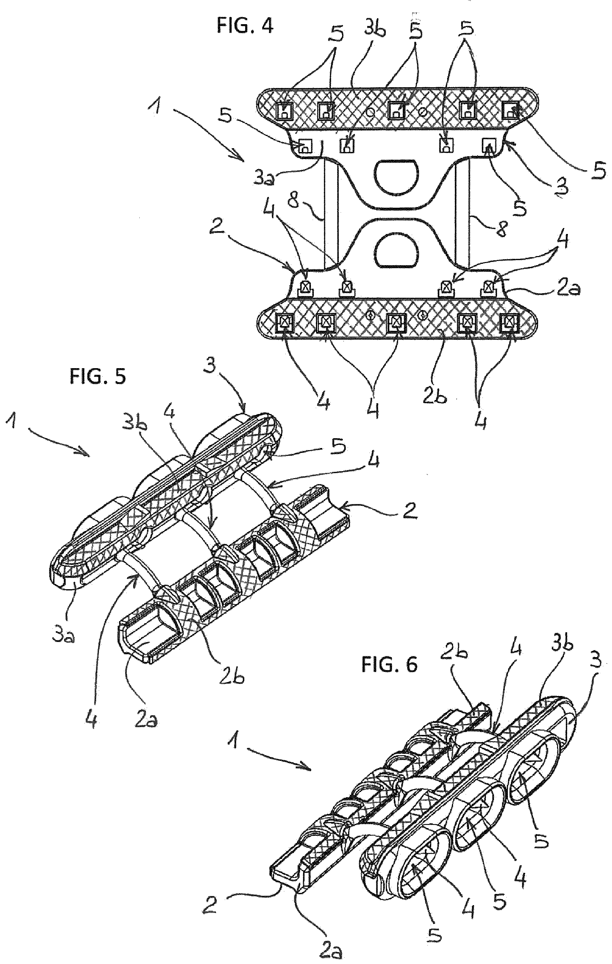

With reference to Figures 1 to 10, the numeral 1 denotes in its entirety a connecting device for anti-hail nets made in accordance with the invention.

The connecting device 1 for anti-hail nets comprises a first plate 2 and a second plate 3 which are shaped to match each other to engage each other in the clamping of anti-hail nets, not illustrated.

In other words, without distinction, two portions of the same anti-hail net or two portions of separate anti-hail nets are interposed between the two first and second plates 2, 3 in such a way as to guarantee a stable mutual positioning.

For this purpose, the connecting device 1, in the embodiments illustrated in Figures 1 to 8, comprises a plurality of sharpened elements 4 emerging from the first plate 2, the sharpened elements 4 being configured to penetrate through the net and engage in respective housings 5 made in the second plate.

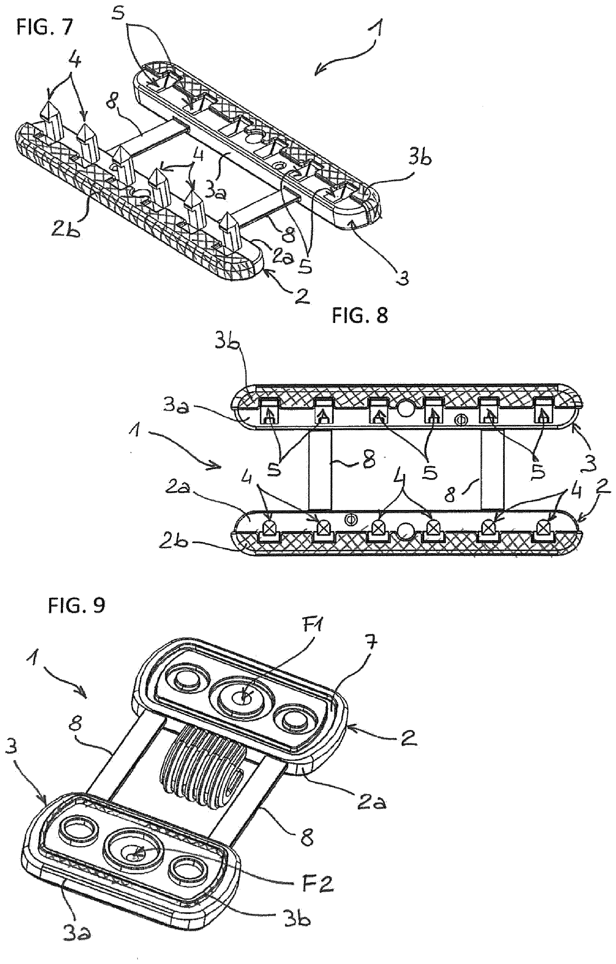

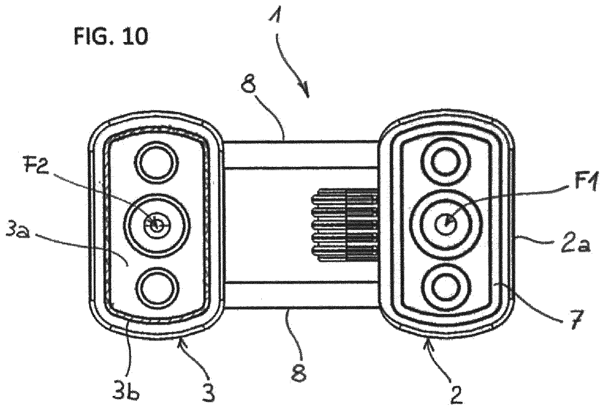

The embodiment of the connecting device 1 illustrated in Figures 9 and 10 is without the above-mentioned sharpened elements but has two through holes F1, F2, designed to face each other in a substantially coaxial manner when the two first and second plates 2, 3 engage each other. The two above-mentioned holes F1, F2 are configured for engaging a screw, not illustrated, for mutually clamping the two plates 2 and 3.

Advantageously, the above-mentioned and not illustrated tightening screw is of the self-tapping type. Alternatively, in variant embodiments not illustrated, a metallic threaded insert is inserted in one of the two above-mentioned holes F1, F2.

The sharpened elements 4 and the respective housings 5, together with the above-mentioned and not illustrated fastening screws define in their entirety, for the connecting device 1 in its various embodiments, respective means for clamping the first and second plates 2, 3.

With reference to the second, third and fourth embodiments of the connecting device 1, illustrated respectively in Figures 3 and 4, 5and 6, 7 and 8, both the first and second plates 2, 3 comprise a respective first structural portion 2a, 3a made of rigid thermoplastic material and a respective second surface portion 2b, 3b made of thermoplastic elastomeric material.

With reference to the first embodiment of the connecting device 1 illustrated in Figures 1 and 2, it comprises two pairs of first and second plates 2 and 3, with the first plates 2 slidably coupled to each other at the respective face opposite that from which the above-mentioned sharpened elements 4 emerge.

The slidable coupling between the above-mentioned first plates 2 is of known type and preferably but not necessarily comprises a snap-on locking element the disengagement of which is actuated by a tab 6.

Again with reference to the first embodiment of the connecting device 1 illustrated in Figures 1 and 2, all four first and second plates 2, 3 comprise a respective first structural portion 2a, 3a made of rigid thermoplastic material, whilst only in the second plates 3 is a respective second surface portion 3b made of thermoplastic elastomeric material.

With reference to the fifth embodiment of the connecting device 1 illustrated in Figures 9 and 10, in it the first and second plates 2, 3 comprise a respective first structural portion 2a, 3a made of rigid thermoplastic material, whilst only in the second plate 3 is a respective second surface portion 3b made of thermoplastic elastomeric material.

As clearly illustrated in Figure 9, the surface portion 3b made of elastomeric material has an annular extension which is approximately rectangular, and is designed, in a closed configuration not illustrated of the connecting device 1, to engage in a respective matching cavity 7, made in the second plate 2.

According to possible variants, not illustrated, of the fifth embodiment of the connecting device 1 illustrated in Figures 9 and 10, both the plates 2 and 3 have a respective second surface portion 2b, 3b made of thermoplastic elastomeric material.

Generally speaking, with reference to all the embodiments illustrated of the connecting device 1, the first structural portion 2a, 3a made of rigid thermoplastic material guarantees the mechanical strength of the device which, even if subjected to considerable forces, is able to remain integral and guarantee the required seal relative to the anti-hail nets.

Advantageously, the above-mentioned rigid thermoplastic material belongs to one of the chemical families included in the group consisting of polyamides, polyesters and filled or not filled polyolefins.

Preferably, but not necessarily, the above-mentioned rigid thermoplastic material is one between polyamide and polybutylene terephthalate (PBT).

Advantageously, the rigid thermoplastic material is filled with stiffening fibres such as, for example, glass fibres and/or mineral fibres.

The above-mentioned second surface portion 2b, 3b made of thermoplastic elastomeric material is designed not to damage the portion of anti-hail net, not illustrated, retained between the two first and second plates 2, 3. In other words, the thermoplastic elastomeric material of the second surface portion 2b, 3b is elastically deformable so as not to damage the portion of anti-hail net in the contact with the first structural portion 2a, 3a, when the portion of net is interposed between the two first and second plates 2, 3.

In addition, given the deformability characteristics of the elastomeric material of the second surface portion 2b, 3b, the rubbing, even prolonged, of the anti-hail net on it does not damage the latter unlike what could occur if the anti-hail net is rubbed with the more rigid material of the first structural portion 2a, 3a. The damage could be even more accentuated if the rubbing occurred at the moulding burrs, which are notoriously sharp due to their negligible thickness and their often sharp shape.

The deformability of the thermoplastic material allows, in effect, the level of the stresses and the flattening which the first structural portion 2a, 3a imparts on the anti-hail net to be reduced.

Moreover, the elastic deformability of the thermoplastic material reduces the relative movements between the first plate 2 and the second plate 3, preventing the net from being pulled and/or flattened by these relative movements.

In this way, the integrity of the anti-hail net over time is guaranteed.

In general, the thermoplastic elastomeric material belongs to the family of thermoplastic elastomers (TPE), or thermoplastic rubbers.

Advantageously, the above-mentioned thermoplastic elastomeric material is a polyethylene.

Advantageously, the second surface portion made of thermoplastic elastomeric material is configured so as not to affect either the above-mentioned sharpened elements 4 or the respective housings 5.

A contact between the sharpened elements 4 and the thermoplastic elastomeric material could in effect result in damage to the latter with negative consequences on the effectiveness of the connecting device 1.

With reference to the above-mentioned and not illustrated moulding burrs, which are in any case present in the first structural portion 2a, 3a of each plate 2, 3, it is advantageous if the second surface portion 2b, 3b made of thermoplastic elastomeric material is configured to prevent the anti-hail net, when interposed between the first and second plates 2, 3, from striking against the moulding burs.

In the connecting device 1 according to the invention, the above-mentioned second portion 2b, 3b made of thermoplastic elastomeric material is made by overmoulding.

The second portion 2b, 3b made of thermoplastic elastomeric material overmoulded on the first structural portion 2a, 3a made of rigid thermoplastic material guarantees optimum adhesion of the two portions 2a, 3a, 2b, 3b.

With reference to Figures 2, 4 and 7 to 10, the connecting device 1 in the second, fourth and fifth embodiments comprises two hinge connecting elements 8 between the above-mentioned first plate 2 and second plate 3.

The hinge-like connecting elements 8 are advantageously made of rigid thermoplastic material, in a single body with the first structural portion 2a, 3a of each of the two first and second plates 2, 3.

According to alternative embodiments not illustrated, the connecting elements 8 also contain a cover made of thermoplastic elastomeric material.

Obviously, the above-mentioned rigid thermoplastic material is in any case sufficiently elastically deformable to allow the two plates 2, 3 to bend on each other.

The connecting device for anti-hail nets according to the invention achieves the preset aims and brings important advantages.

A first of these advantages is due to the fact that the anti-hail net is clamped in contact with a material, the thermoplastic elastomeric material of the second surface portion 2b, 3b, which retains it gently without wear and, above all, also prevents those limited relative movements between the plates and the net which in the long term can cause deterioration and breakages in the net.

A further advantage linked to the use of a connecting device according to the invention is due to the fact that the presence of the second portion made of elastomeric thermoplastic material prevents direct contact with portions which may also be sharp (for example moulding burrs or sharp edges) of the plates.

## Claims

1. Connecting device for connecting anti-hail nets, comprising:
- a first plate (2) and a second plate (3) with counter-shape to engage each other in the clamping of anti-hail nets;
- fastening means to fasten said first plate (2) and second plate (3) and to ensure the stable holding of a fastening position of at least one portion of the hail net between said first (2) and second (3) plate, **characterized in that** at least one of said first (2) and second (3) plate comprises a first structural portion (2a, 3a) made of rigid thermoplastic material and a second superficial portion (2b, 3b) made of thermoplastic elastomeric material, said second portion elastically deformable for not damaging said portion of the anti-hail net.

2. Connecting device according to claim 1, **characterized in that** both said first and second plates (2, 3) comprise a respective first structural portion (2a, 3a) made of rigid thermoplastic material and a respective second superficial portion (2b, 3b) made of thermoplastic elastomeric material.

3. Connecting device according to any one of the preceding claims, **characterized in that** said second portion (2b, 3b) of thermoplastic elastomeric material is made by overmoulding.

4. Connecting device according to any one of the preceding claims, **characterized in that** said rigid thermoplastic material belongs to one of the chemical families included in the group consisting of polyamides, polyesters and filled or not filled polyolefins.

5. Connecting device according to any one of the preceding claims, **characterized in that** said thermoplastic elastomeric material is a polyethylene.

6. Connecting device according to any one of the preceding claims, **characterized in that** said fastening means comprise a plurality of sharpened elements (4) emerging from a first of said first (2) and second (3) plate and configured to penetrate through the net and snap into their respective housings (5) obtained in the other of said first and second plate (2, 3), said second superficial portion (2b, 3b) made of thermoplastic elastomeric material not affecting either said sharpened elements (4) nor said housings (5).

7. Connecting device according to any one of the preceding claims, in which said first (2) and second (3) plates are moulded and have respective moulding burrs, **characterized in that** said second superficial portion (2b, 3b) made of thermoplastic elastomeric material is configured to prevent said anti-hail net when placed between said plates (2, 3) first and second from hitting said moulding burrs of said plates (2, 3).

8. Connecting device according to any one of the preceding claims, including hinged connection elements (8) between said first (2) and second (3) plate, **characterized in that** said hinged connection elements (8) are made of rigid thermoplastic material.

## Patentansprüche

1. Verbindungsvorrichtung zum Verbinden von Hagelschutznetzen, umfassend:
- eine erste Platte (2) und eine zweite Platte (3) mit Gegenform, um beim Klemmen von Hagelschutznetzen ineinanderzugreifen;
- Befestigungsmittel zum Befestigen der ersten Platte (2) und der zweiten Platte (3) und zum Sicherstellen des stabilen Haltens einer Befestigungsposition mindestens eines Abschnitts des Hagelnetzes zwischen der ersten (2) und der zweiten (3) Platte, **dadurch gekennzeichnet, dass** mindestens eine zwischen der ersten (2) und der zweiten (3) Platte einen ersten strukturellen Abschnitt (2a, 3a), der aus einem starren thermoplastischen Material hergestellt ist, und einen zweiten oberflächlichen Abschnitt (2b, 3b), der aus einem thermoplastischen elastomeren Material hergestellt ist, umfasst, wobei der zweite Abschnitt elastisch verformbar ist, um den Abschnitt des Hagelschutznetzes nicht zu beschädigen.

2. Verbindungsvorrichtung nach Anspruch 1, **dadurch gekennzeichnet, dass** sowohl die erste als auch die zweite Platte (2, 3) einen jeweiligen ersten strukturellen Abschnitt (2a, 3a), der aus starrem thermoplastischem Material hergestellt ist und einen jeweiligen zweiten oberflächlichen Abschnitt (2b, 3b), der aus thermoplastischem elastomerem Material hergestellt ist, umfassen.

3. Verbindungsvorrichtung nach einem der vorhergehenden Ansprüche, **dadurch gekennzeichnet, dass** der zweite Abschnitt (2b, 3b) aus thermoplastischem elastomeren Material durch Umspritzen hergestellt ist.

4. Verbindungsvorrichtung nach einem der vorhergehenden Ansprüche, **dadurch gekennzeichnet, dass** das starre thermoplastische Material zu einer der chemischen Familien gehört, die zur Gruppe gehören, die aus Polyamiden, Polyestern und gefüllten oder nicht gefüllten Polyolefinen besteht.

5. Verbindungsvorrichtung nach einem der vorhergehenden Ansprüche, **dadurch gekennzeichnet, dass** das thermoplastische elastomere Material ein Polyethylen ist.

6. Verbindungsvorrichtung nach einem der vorhergehenden Ansprüche, **dadurch gekennzeichnet, dass** die Befestigungsmittel eine Vielzahl von geschärften Elementen (4) umfassen, die von einer ersten zwischen der ersten (2) und zweiten (3) Platte hervortreten und so ausgelegt sind, dass sie durch das Netz eindringen und in ihre jeweiligen Gehäuse (5) einrasten, die in der anderen zwischen der ersten und zweiten Platte (2, 3) erhalten sind, wobei der zweite oberflächliche Abschnitt (2b, 3b) aus thermoplastischem elastomeren Material hergestellt ist, das weder die geschärften Elemente (4) noch die Gehäuse (5) beeinträchtigt.

7. Verbindungsvorrichtung nach einem der vorhergehenden Ansprüche, wobei die erste (2) und die zweite (3) Platte geformt sind und jeweilige Formgrate aufweisen, **dadurch gekennzeichnet, dass** der zweite oberflächliche Abschnitt (2b, 3b), der aus thermoplastischem elastomeren Material hergestellt ist, so ausgelegt ist, dass er verhindert, dass das Hagelschutznetz, wenn es zwischen der ersten und zweiten Platten (2, 3) angeordnet ist, auf die Formgrate der Platten (2, 3) auftrifft.

8. Verbindungsvorrichtung nach einem der vorhergehenden Ansprüche, einschließend gelenkige Verbindungselemente (8) zwischen der ersten (2) und der zweiten (3) Platte, **dadurch gekennzeichnet, dass** die gelenkigen Verbindungselemente (8) aus einem starren thermoplastischen Material hergestellt sind.

## Revendications

1. Dispositif de connexion pour connecter des filets anti-grêle, comprenant :
- une première plaque (2) et une seconde plaque (3) à contre-forme pour se mettre en prise l'une dans l'autre lors du serrage des filets anti-grêle ;
- des moyens de fixation servant à fixer ladite première plaque (2) et ladite seconde plaque (3) et pour assurer le maintien stable d'une position de fixation d'au moins une partie du filet anti-grêle entre ladite première (2) et ladite seconde (3) plaque, **caractérisé en ce qu'**au moins une plaque parmi ladite première (2) et ladite seconde (3) plaque comprend une première partie structurelle (2a, 3a) composée d'un matériau thermoplastique rigide et une seconde partie superficielle (2b, 3b) composée d'un matériau élastomère thermoplastique, ladite seconde partie étant élastiquement déformable pour ne pas endommager ladite partie du filet anti-grêle.

2. Dispositif de connexion selon la revendication 1, **caractérisé en ce que** lesdites première et seconde plaques (2, 3) comprennent toutes deux une première partie structurelle (2a, 3a) respective composée d'un matériau thermoplastique rigide et une seconde partie superficielle (2b, 3b) respective composée d'un matériau élastomère thermoplastique.

3. Dispositif de connexion selon l'une quelconque des revendications précédentes, **caractérisé en ce que** ladite seconde partie (2b, 3b) en matériau élastomère thermoplastique est réalisée par surmoulage.

4. Dispositif de connexion selon l'une quelconque des revendications précédentes, **caractérisé en ce que** ledit matériau thermoplastique rigide appartient à l'une des familles chimiques incluses dans le groupe constitué par les polyamides, les polyesters et les polyoléfines chargés ou non chargés.

5. Dispositif de connexion selon l'une quelconque des revendications précédentes, **caractérisé en ce que** ledit matériau élastomère thermoplastique est un polyéthylène.

6. Dispositif de connexion selon l'une quelconque des revendications précédentes, **caractérisé en ce que** lesdits moyens de fixation comprennent une pluralité d'éléments aiguisés (4) émergeant d'une première desdites première (2) et seconde (3) plaques et configurés pour pénétrer à travers le filet et s'encliqueter dans leurs logements (5) respectifs obtenus dans l'autre plaque desdites première et seconde plaques (2, 3), ladite seconde partie superficielle (2b, 3b) constituée d'éléments en matériau élastomère thermoplastique n'affectant ni lesdits logements (4) ni lesdits logements (5).

7. Dispositif de connexion selon l'une quelconque des revendications précédentes, dans lequel lesdites première (2) et deuxième (3) plaques sont moulées et comportent des bavures de moulage respectives, **caractérisé en ce que** ladite deuxième partie superficielle (2b, 3b) en matériau élastomère thermoplastique est configurée pour empêcher ledit filet anti-grêle, lorsqu'il est placé entre lesdites première et deuxième plaques (2, 3), de heurter lesdites bavures de moulage desdites plaques (2, 3).

8. Dispositif de connexion selon l'une quelconque des revendications précédentes, comportant des éléments de connexion (8) montés articulés entre ladite première (2) et ladite deuxième (3) plaque, **caractérisé en ce que** lesdits éléments de connexion (8) montés articulés sont réalisés en matériau thermoplastique rigide.
